Europäisches Patentamt

European Patent Office

Office européen des brevets

(19)

(11) Veröffentlichungsnummer: **0 147 772 B1**

(12) **EUROPÄISCHE PATENTSCHRIFT**

(45) Veröffentlichungstag der Patentschrift: 05.06.91

(51) Int. Cl.5 **G01F 1/26**

(21) Anmeldenummer: 84115726.6

(22) Anmeldetag: 18.12.84

(54) **Durchfluss-Messvorrichtung.**

(30) Priorität: 19.12.83 CH 6788/83

(43) Veröffentlichungstag der Anmeldung:
10.07.85 Patentblatt 85/28

(45) Bekanntmachung des Hinweises auf die
Patenterteilung:
05.06.91 Patentblatt 91/23

(84) Benannte Vertragsstaaten:
AT BE FR GB IT LU NL SE

(56) Entgegenhaltungen:
EP-A- 0 057 004
GB-A- 2 068 560

(73) Patentinhaber: HYDROTECHNIK FRUTIGEN AG
Schwandistrasse
CH-3714 Frutigen(CH)

(72) Erfinder: Pieren, Heinz
Wisli 226
CH-3654 Gunten /Schweiz(CH)

(74) Vertreter: Fiedler, Otto Karl, Dipl.-Ing.
Hemminger Strasse 4
W-7015 Korntal-Münchingen 2(DE)

**Beschreibung**

Die vorliegende Erfindung bezieht sich auf eine Durchfluss-Messvorrichtung nach dem Oberbegriff des Patentanspruchs 1. Eine derartige Messvorrichtung ist bekannt aus der EP-A1 Nr. 0057004.

Die bekannte Messvorrichtung weist einen schneidenförmigen Blendenkörper auf, der in einem Durchflussgehäuse koaxial zu einem inneren, kreisförmigen, gehäusefesten Schneidenkörper verschiebbar gelagert ist und in einer Nullstellung mit radial genau fluchtenden Schneiden die Mess-Durchflussöffnung verschliesst. Bei Durchströmung in der einen oder anderen Richtung verlässt die äussere Blendenschneide ihre bezüglich des inneren Schneidenkörpers radial fluchtende Nullstellung und gibt einen mit der axialen Verschiebung zunehmenden Durchflussquerschnitt frei, der sich im Gleichgewicht zwischen dem strömungsgeschwindigkeitsabhängigen Blenden-Differenzdruck einerseits und einer elastischen Rückstellkraft andererseits einstellt. Die axiale Stellungsdifferenz zwischen den Schneiden, d.h. also auch die Auslenkung des verschiebbaren Blendenkörpers aus seiner Nullstellung, ist somit ein Mass für die Durchfluss-Volumengeschwindigkeit.

Bei dieser bekannten Konstruktion ist die Nullpunktgenauigkeit der sich ergebenden Messkennlinie nicht nur vom genauen radialen Fluchten und damit von der Dichtstellung der beiden Schneiden, sondern auch von der Schneidenschärfe, d.h. der geringen axialen Breite der Schneiden abhängig, die jedoch auf endliche Werte begrenzt ist. Eine Nulljustierung für beide, den entgegengesetzten Durchflussrichtungen zugeordneten Kennlinienzweige ist grundsätzlich nicht möglich.

Dies gilt noch ausgeprägter für eine aus der GB-A-2 068 560, Fig. 8 und 9, bekannte Durchfluss-Messeinrictung für entgegengesetzte Durchflussrichtungen. Dort ist ein als scheibenartiger Kolben ausgebildetes Messventilglied vorgesehen, das seine Ruhe- bzw. Mittelstellung unter der Wirkung zweier gegeneinander vorgespannter Druckfedern findet und in jeder der beiden Durchflussrichtungen entgegen der Federkraft einen Messweg entsprechend etwa der Scheibendicke ausführen muss, bevor der Durchfluss freigegeben wird.

Aufgabe der Erfindung ist daher die Schaffung einer insbesondere für Zweirichtungsmessung geeigneten Durchfluss-Messvorrichtung, die sich durch einfache und genaue Bestimmbarkeit der Kennlinien-Nullstellen auszeichnet, sich bei Zweirichtungsmessung also durch einen stetig und symmetrisch festlegbaren Kennlinienverlauf im Nullpunktsbereich auszeichnet. Die erfindungsgemässe Lösung dieser Aufgabe kennzeichnet sich durch die Merkmale des Patentanspruchs 1.

Bei dieser Konstruktion kann das Messventilglied vor dem Einsatz des Durchflusses, d.h. im Bereich unterhalb des Kennlinien-Nullpunktes, eine vom Oeffnungsbeginn endlich weit entfernte Ausgangslage einnehmen, ohne dass dies einen Einfluss auf die Nullpunktgenauigkeit hat. Es muss lediglich der Eintritt der Wirkverbindung zwischen dem Messventilglied und dem Messweggeber justiert werden, was grundsätzlich einfach möglich ist. Beim Einsatz des Durchflusses bewegt sich das Messventilglied kräftefrei, d.h. ohne Beeinflussung des Messweggebers und somit ohne Fehlmessung, aus seiner Ausgangslage in die Nullstellung, wo es mit dem Messweggeber in Wirkverbindung tritt, z.B. durch Berührung mit einem einstellbaren Anschlag eines Messgebergliedes. Es ergibt sich also ein Unterschwellenbereich bezüglich dem Messbereichanfanges mit unkritischer Lage des Messventilgliedes. Dies ermöglicht auch eine breite, jedenfalls aber unkritische Bemessung des durchflussbestimmenden Teils des Messventilgliedes, z.B. einer Blendenschneide. Vor allem aber ergibt sich bei Zweirichtungsmessung auf diese Weise ein endlicher Abstand der beiden Nullstellungen des Messventilgliedes, die somit unabhängig voneinander entsprechend dem jeweiligen Durchflussbeginn bestimmt bzw. eingestellt werden können. Wegen der Unwirksamkeit der Verschiebung des Messventilgliedes innerhalb des Unterschwellenbereiches bedeutet dies die einfache Möglichkeit einer kongruenten Nullpunktjustierung beider Kennlinienzweige.

Die Erfindung wird weiter anhand der in den Zeichnungen schematisch dargestellten Ausführungsbeispiele erläutert. Hierin zeigt:

Fig.1     einen Axialschnitt einer ersten Ausführungsform einer Zweirichtungs-Messvorrichtung nach der Erfindung,

Fig.2     einen Teil-Axialschnitt einer abgewandelten Ausführung mit schmalzylindrischem Messventilglied,

Fig.3     einen Teil-Axialschnitt einer zweiten Ausführung mit breitzylindrischem, aussengeführtem Messventilglied und

Fig.4     einen Querschnitt einer dritten Ausführung mit Drehschieber Messventilglied.

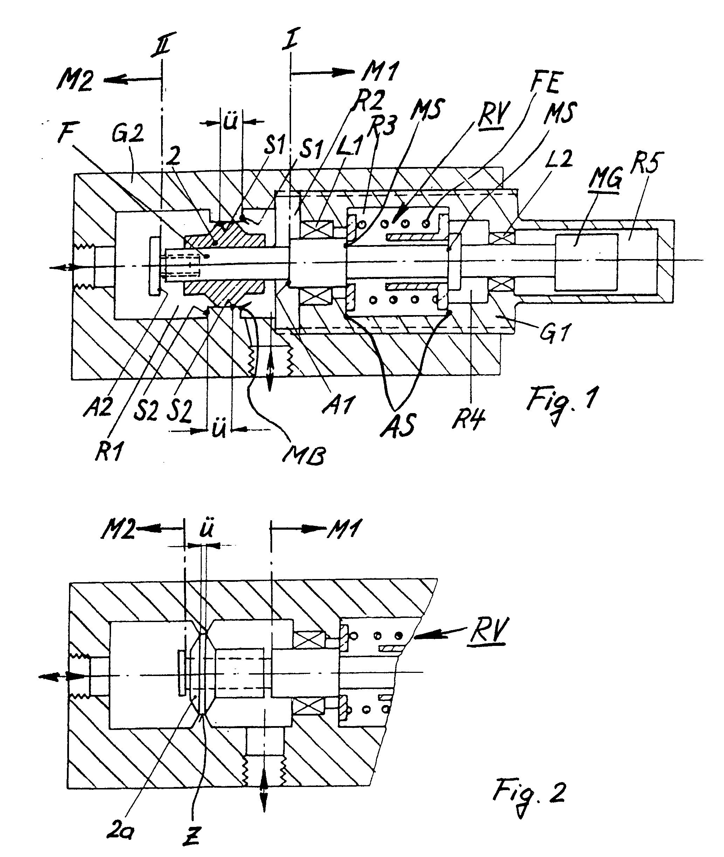

Bei der Ausführung nach Fig.1 ist ein Führungsglied F in üblichen Lagern L1 und L2 in einem ersten Gehäuseteil G1 axial verschiebbar geführt. Das Führungsglied F ist mit in ihrem gegenseitigen Abstand einstellbaren Mitnehmeranschlägen A1 und A2 versehen und fest mit einem Messwertgeber üblicher Art, z.B. einem elektromagnetischen oder elektrooptischen Messweggeber MG, verbunden. Die Mitnehmeranschläge bestimmen die Ankopplung eines auf dem Führungsglied frei verschiebbaren Messventilgliedes 2, das zusammen mit einem zweiten Gehäuseteil G2 Messkantenpaare S1 und S2 für die beiden Durchflussrichtungen entsprechend den eingetragenen Doppelpfeilen bilden. Es ergeben sich somit Anschlagstellungen I und II, welche die Endpunkte eines Unterschwellenbereiches bestimmen, dessen Verschiebungsweglänge aus der gezeigten Mittelstellung des Messventilgliedes für jede Durchflussrichtung mit ü entsprechend dem üblicherweise als Ueberdeckung bezeichneten Ventil-Vorhub gekennzeichnet ist. Bei Verwendung zur Zweirichtungsmessung ergibt sich also zwischen den beiden Mess-Anfangsstellungen des Ventilgliedes insgesamt ein Unterschwellenbereich 2ü, bei Einrichtungsmessung mit (nicht dargestellter) Begrenzung des Ventilweges in der Mittelstellung ein solcher von ü. Der Durchfluss erfolgt zwischen im Gehäuseteil G2 gebildeten Räumen R1 und R2, die durch die enge Passung zwischen Messventilglied und Gehäuseteil G2 gegeneinander innerhalb des Vorhubes abgedichtet sind. Der Raum R2 kommuniziert in nicht dargestellter Weise mit im Gehäuseteil G1 gebildeten Räumen R3 bis R5, so dass die Bewegungsfreiheit des Führungsgliedes F gewährleistet ist.

Eine federnde Rückstellvorrichtung RV benötigt in vorteilhafter Weise für die wechselweise Rückstellung entgegen beiden Durchflussrichtungen nur ein zum Führungsglied F koaxiales Druckfederelement FE, das sich zwischen zwei gegensinnigen, gehäusefesten Anschlägen AS sowie zwei entsprechenden, mit dem Messweggeber MG bzw. dem Führungsglied F verbundenen Anschlägen MS wechselweise abhebbar abstützt. Somit wird die Rückstellvorrichtung RV jeweils nur innerhalb der sich an die Endstellungen I bzw. II des Messventilgliedes anschliessenden Mess-Bewegungsbereiche M1 bzw. M2 wirksam. Ausgehend von einer Lage des Messventilgliedes innerhalb des Unterschwellenbereiches sind diese Endstellungen dann erreicht, wenn die Messkantenpaare S1 bzw. S2 am Messventilglied 2 und an der im Gehäuse gebildeten Durchfluss-Messbohrung MB zur Deckung kommen.

Es versteht sich im übrigen, dass innerhalb des Unterschwellenbereiches - auch abgesehen von unvermeidlichem Bewegungsspiel - zwischen dem Messventilglied und der Durchfluss-Messbohrung keine Abdichtung zu bestehen braucht. vielmehr können die Mess-Bewegungsbereiche M1 und M2 gegebenenfalls auch mit einem unteren Schwellenwert des Durchflusses beginnen (Nullpunktunterdrückung). Dies kann einfach mittels eines definierten Spaltes zwischen Messventilglied und Messbohrung erreicht werden. Ansonsten wird das Messventilglied wenigstens annähernd dichtend innerhalb der Messbohrung eingepasst. Hierzu kann das Messventilglied 2a gemäss Fig.2 mit einer relativ schmalen Zylinderschneide Z versehen und als Linearschieber mit geringem Laufspiel in die Messbohrung eingepasst werden. Dabei wird die passgenaue Herstellung durch die geringe axiale Breite der dichtenden Zylinderschneide Z erleichtert.

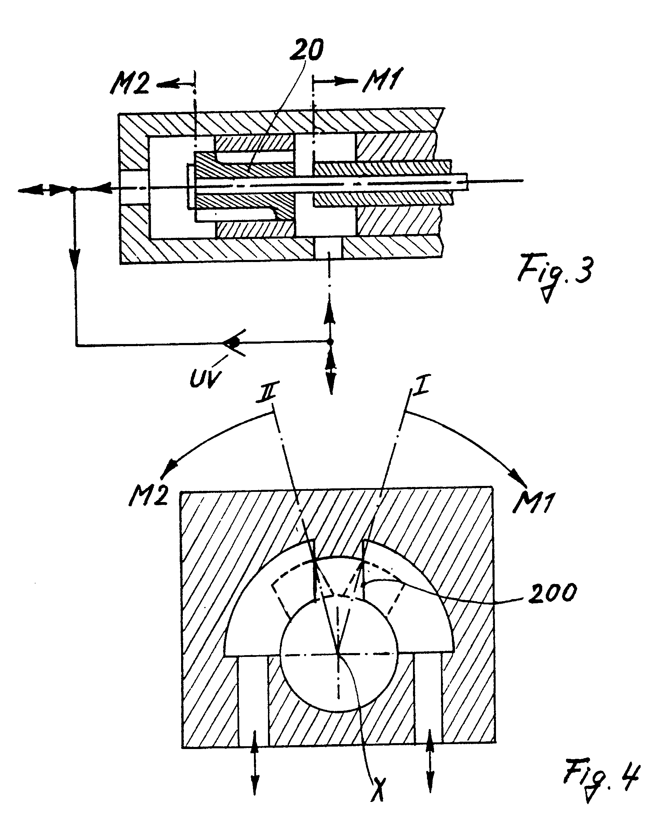

Bei der Ausführung nach Fig.3 ist ein wiederum als Linearschieber ausgebildetes Messventilglied 20 in einer Durchfluss-Messbohrung umfangsseitig geführt gelagert. Die gegensinnigen Mess-Bewegungsbereiche M1 und M2 werden durch in Axialrichtung gegeneinander versetzte Aussparungen im Messventilglied und gehäuseseitige Messkanten sowie durch entsprechend justierte Anschlagmitnehmer als Wirkverbindungselemente zu einen - hier nicht dargestellten - Messweggeber bestimmt. Diese Ausführung hat u.a. den Vorteil der besonders einfachen Konstruktion und Herstellbarkeit sowie einer grossflächigen, verschleissarmen Messventilführung.

Fig.3 zeigt ferner eine einfache Möglichkeit, eine an sich für Zweirichtungsmessung vorgesehene Vorrichtung mittels eines parallel zur Mess-Durchflussöffnung angeordneten Einweg-Umgehungsventils UV für eine Einrichtungsmessung mit freiem Rückfluss einzurichten.

Endlich zeigt Fig.4 eine Zweirichtungs-Messvorrichtung mit als um eine Achse X schwenkbarem Drehschieber ausgebildetem Messventilglied 200. Die gegensinnigen Mess-Bewegungsbereiche M1 und M2 werden in analoger Weise wie gemäss Fig.1 bestimmt. Ein besonderer Vorteil dieser Ausführung besteht darin, dass eine einfache Kupplung des Messventilgliedes mit einem Drehzeiger-Anzeigeinstrument, aber auch mit Drehschieberventil-Stellgliedern und dergl. mit geringem Aufwand möglich ist.

**Ansprüche**

1. Durchfluss-Messeinrichtung mit wenigstens einer in Abhängigkeit von der Durchflussmenge veränderlichen Durchflussöffnung, deren Querschnitt durch ein beweglich gelagertes, unter der Wirkung des Differenzdruckes an der Durchflussöffnung sowie einer federnden Rückstellvorrichtung (RV) stehendes Messventilglied (2) bestimmt ist, welches die Durchflussöffnung im Bereich eines Anfangsmesswertes der Durchflussgeschwindigkeit auf einen Minimalquerschnitt- insbesondere wenigstens annähernd zum Verschluss- bringt, dadurch gekennzeichnet, dass das Messventilglied (2) innerhalb eines vorgegebenen, dem Anfangsmesswert der Durchflussgeschwindigkeit und damit dem Minimalquerschnitt des Messventilgliedes zugeordneten Unterschwellenbereiches (ü bzw. 2ü) wenigstens annähernd frei von Rückstellkraft beweglich gelagert ist und in mindestens einem sich an ein Ende (I bzw. II) des Unterschwellenbereiches anschliessenden Mess-Bewegungsbereich (M1 bzw. M2) mit einem Messwertgeber (MG) in Wirkverbindung steht.

2. Durchfluss-Messvorrichtung nach Anspruch 1, dadurch gekennzeichnet, dass zwecks Zweirichtungs-Durchflussmessung im Anschluss an beide Enden des Unterschwellenbereiches (2ü) je ein Mess-Bewegungsbereich (M1, M2) für jeweils eine Durchflussrichtung vorgesehen ist.

3. Durchfluss-Messvorrichtung nach Anspruch 1 oder 2, dadurch gekennzeichnet, dass wenigstens eine Unterschwellenbereich-Endlage (I bzw. II) des Messventilgliedes (2) einstellbar ist.

4. Durchfluss-Messvorrichtung nach einem der vorangehenden Ansprüche, dadurch gekennzeichnet, dass das Messventilglied (2) auf einem mit dem Messwertgeber (MG) verbundenen Führungsglied (F) innerhalb des Unterschwellenbereiches rückstellkraftfrei gelagert ist.

5. Durchfluss-Messvorrichtung nach Anspruch 4, dadurch gekennzeichnet, dass das Messventilglied (2) innerhalb einer Durchfluss-Messbohrung (MB) auf einem zu dieser Bohrung achsparallelen Führungsglied (F) verschiebbar gelagert ist.

6. Durchfluss-Messvorrichtung nach Anspruch 5, dadurch gekennzeichnet, dass an dem Führungsglied (F) mindestens ein einstellbarer Anschlagmitnehmer (A1, A2) zur Endbestimmung des Unterschwellenbereiches vorgesehen ist.

7. Durchfluss-Messvorrichtung nach einem der vorangehenden Ansprüche, dadurch gekennzeichnet, dass das Messventilglied (20) in einer Durchfluss-Messbohrung (MB) umfangsseitig geführt gelagert ist.

8. Durchfluss-Messvorrichtung nach einem der vorangehenden Ansprüche, dadurch gekennzeichnet, dass das Messventilglied (2a) als Linearschieber mit in einer Durchfluss-Messbohrung (MB) wenigstens annähernd dichtend und verschiebbar angeordneter Zylinderschneide (Z) ausgebildet ist.

9. Durchfluss-Messvorrichtung nach einem der Ansprüche 1 bis 7, dadurch gekennzeichnet, dass das Messventilglied (200) als Drehschieber mit Schwenk-Unterschwellenbereich ausgebildet ist.

10. Durchfluss-Messvorrichtung nach einem der vorangehenden Ansprüche, dadurch gekennzeichnet, dass zwecks Einrichtungs-Durchflussmessung mit freiem Rückfluss ein Einweg-Umgehungsventil (UV) parallel zu der Mess-Durchflussöffnung angeordnet ist.

11. Durchfluss-Messvorrichtung nach einem der vorangehenden Ansprüche, gekennzeichnet durch eine elastische Rückstellvorrichtung (RV), die ein sich zwischen zwei gegensinnigen, gehäusefesten Anschlägen (AS) sowie zwei entsprechenden, messgliedfesten Anschlägen (MS) wechselweise abhebbar abstützendes Federelement (FE) aufweist.

## Claims

1. Flow meter device comprising at least one flow passage being variable dependently on the flow rate, the cross-section of said flow passage being defined by a movable measuring valve member (2), which stands under the action of the differential pressure at the flow passage and of a spring reset device (RV), said measuring valve member bringing said flow passage to a minimum cross-section, particularly at least approximately to closure, in the range of an initial value of the flow velocity, characterized in that the measuring valve member (2) within a predetermined underthreshold range (ü or 2ü resp.) corresponding to the initial value of the flow velocity and accordingly to the minimum cross-section of the measuring valve member, is arranged movably at least approximately free of reset force, further said measuring valve member being in operational connection with a measuring value transmitter (MG) within at least one measuring motion range (M1 or M2 resp.) subsequent to an end (I or II resp.) of said underthreshold range.

2. Flow meter device according to claim 1, characterized in that for the purpose of bidirectional flow measurement, subsequent to each of both ends of said under-threshold range (2ü) a measuring motion range (M1, M2) is provided for one flow direction each.

3. Flow meter device according to claim 1 or 2, characterized in that at least one under-threshold range end position (I or II resp.) of the measuring valve member is made adjustable.

4. Flow meter device according to anyone of the preceding claims, characterized in that the measuring valve member (2) is arranged movably and free of reset force within the under-threshold range on a guiding member (F) connected with said measuring value transmitter (MG).

5. Flow meter device according to claim 4, characterized in that the measuring valve member (2) is arranged within a flos measuring bore (MB) shiftingly on a guiding member being arranged in parallel to the axis of said bore.

6. Flow meter device according to claim 5, characterized in that at least one adjustable abutment driver (A1, A2) is provided on said guiding member (F) for defining an end of said under-threshold range.

7. Flow meter device according to anyone of the preceding claims, characterized in that the measuring valve member (20) is movably arranged and circumferentially guided in a flow measuring bore (MB).

8. Flow meter device according to anyone of the preceding claims, characterized in that the measuring valve member (2a) is formed as a linear slide comprising a cylindrical edge portion (Z) arranged at least approximately sealingly and shiftingly in a flow measuring bore (MB).

9. Flow meter device according to anyone of claims 1 to 7, characterized in that the measuring valve member (200) is formed as a rotational slide with a rotational under-threshold range.

10. Flow meter device according to anyone of the preceding claims, characterized in that for the purpose of unidirectional flow measurement with free backflow a unidirectional bypass valve (UV) is arranged in parallel to the measuring flow passage.

11. Flow meter device according to anyone of the preceding claims, characterized by an elastic reset device (RV) comprising a spring element (FE), which is supported in a manner capable of alternate lifting, between two opposite abutments (AS) fixedly connected with a housing and two corresponding abutments (MS) fixedly connected with the measuring valve member.

**Revendications**

1. Dispositif de mesure de débit ayant au moins une ouverture de passage variable en fonction du débit, dont la section est déterminée par un organe de soupape de mesure (2) mobile soumis à l'action de la différence de pression à l'ouverture de passage ainsi que d'un dispositif de rappel à ressort (RV) qui amène l'ouverture de passage dans le domaine d'une valeur initiale de mesure de la vitesse de passage à une section minimum, en particulier pour le moins en approchant la fermeture, caractérisé par le fait que l'organe de soupape de mesure (2) mobile se trouve à l'intérieur d'un domaine de sous-seuil préfixé (ü resp. 2ü) rattaché à la valeur initiale de mesure de la vitesse de passage ainsi qu'a la section minimum de l'organe de soupape de mesure, pour le moins sans force de rappel et placé en liaison active avec un capteur de mesure (MG) raccordé au moins à une extrémité (I resp. II) d'un mouvement de mesure (M1 resp. M2) attenant au domaine de sous-seuil.

2. Dispositif de mesure de débit selon la revendication 1, caractérisé par le fait que, pour effectuer les mesures de débit en deux directions, un domaine de mouvement de mesures (M1 resp. M2) pour chaque direction de passage est prévu en connexion avec les deux estrémités du domaine de sous-seuil (2ü).

3. Dispositif de mesure de débit selon les revendications 1 et 2, caractérisé par le fait qu'au moins une position terminale du domaine de sous-seuil (I resp. II) de l'organe de soupape de mesure (2) est réglable.

4. Dispositif de mesure de débit selon l'une des revendications précédentes, caractérisé par le fait que l'organe de soupape de mesure (2) est monté, sans force de rappel, sur un élément de guidage (F) relié au capteur de mesures (MG) à l'intérieur du domaine de sous-seuil.

5. Dispositif de mesure de débit selon la revendication 4, caractérisé par le fait que l'organe de soupape de mesure (2) est monté de façon décalable à l'intérieur d'un alésage de mesure de débit (MB) sur un élément de guidage (F) dont l'axe est parallèle à cet alésage.

6. Dispositif de mesure de débit selon la revendication 5, caractérisé par le fait qu'au moins un taquet de butée réglable (A1, A2) pour la détermination finale du domaine de sous-seuil est prévu sur l'élément de guidage (F).

7. Dispositif de mesure de débit selon l'une des revendications précédentes, caractérisé par le fait que l'organe de soupape de mesure (20) est prévu dans un alésage de mesure du débit avec guidage périphérique.

8. Dispositif de mesure de débit selon l'une des revendications précédentes, caractérisé par le fait que l'organe de la soupape de mesure (2a) est constitué, comme vanne linéaire, d'une lame cylindrique (Z) disposée dans un alésage de mesure du débit (MB) au moins de façon étanche et déplaçable.

9. Dispositif de mesure de débit selon l'une des revendications 1 à 7, caractérisé par le fait que l'organe de soupape de mesure (200) est constitué comme vanne rotative avec domaine de sous-seuil orientable.

10. Dispositif de mesure de débit selon l'une des revendications précédentes, caractérisé par le fait que, pour effectuer des mesures de débit d'installations à reflux libre, il est prévu une soupape de dérivation à voie unique (uv) disposée parallèlement à l'ouverture de mesure du débit.

11. Dispositif de mesure de débit selon l'une des revendications précédentes, caractérisé par un dispositif de rappel élastique (RV) qui comporte un élément à ressort (FE) pouvant être tour à tour enlevé et s'appuyant entre deux butées (AS) montées en sens opposé et fixées au bâti ainsi qu'entre deux butées fixées à l'élément de mesure.

Fig. 1

Fig. 2

20

M2 ← → M1

Fig. 3

UV

II          I

M2          M1

200

X

Fig. 4